# EUROPEAN PATENT SPECIFICATION

(11) **EP 0 904 915 B1**
(45) Date of publication and mention of the grant of the patent: **17.11.2004**
(21) Application number: 98108067.4
(22) Date of filing: 04.05.1998
(51) Int. Cl.: B29C 43/38, B29C 37/00, B60R 13/04

(54) **Method of forming a molding**
Verfahren zur Herstellung eines Formteiles
Procédé pour le formage d'une pièce

(30) Priority: 25.09.1997 JP 27977997
(43) Date of publication of application: 31.03.1999
(73) Proprietor: INOAC CORPORATION, Nagoya-shi Aichi-ken (JP)
(72) Inventor: Sugiura, Masatoshi, Fujii-cho, Anjo-shi, Aichi (JP); Inoue, Koji, Fujii-cho, Anjo-shi, Aichi (JP); Muraguchi, Koichi, Fujii-cho, Anjo-shi, Aichi (JP)
(74) Representative: Füchsle, Klaus, Dipl.-Ing.

(56) References cited:
- DE-A- 1 479 681
- DE-C- 909 305
- US-A- 3 684 582
- PATENT ABSTRACTS OF JAPAN vol. 1997, no. 03, 31 March 1997 (1997-03-31) -& JP 08 300473 A (INOAC CORP), 19 November 1996 (1996-11-19)
- PATENT ABSTRACTS OF JAPAN vol. 1996, no. 12, 26 December 1996 (1996-12-26) -& JP 08 216265 A (INOAC CORP), 27 August 1996 (1996-08-27)

## Description

### BACKGROUND OF THE INVENTION

### 1. Field of the Invention

The present invention relates to a method of forming a molding to be attached to a motor vehicle or the like.

### 2. Description of the Related Art

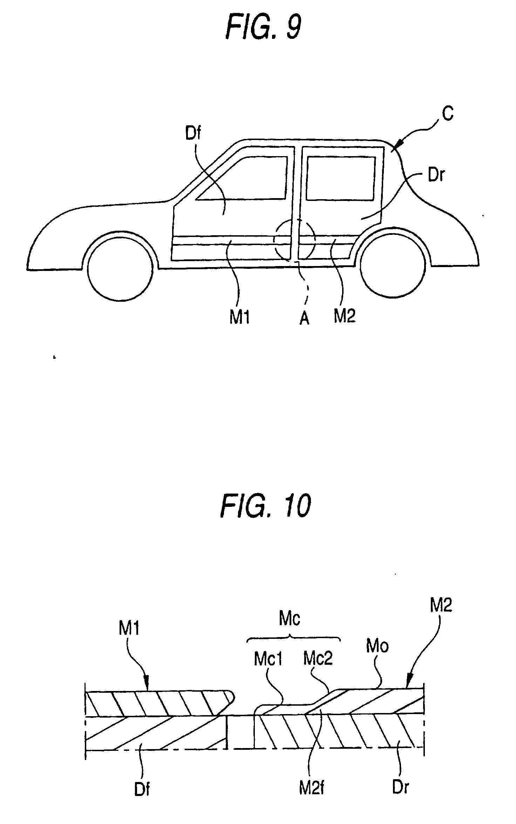

For example, as shown in Fig. 9, for the purpose of decoration, door protection, etc., strip-belt moldings of plastic M1 and M2 are attached to the door on the side of a motor vehicle C in a longitudinal direction of a body thereof.

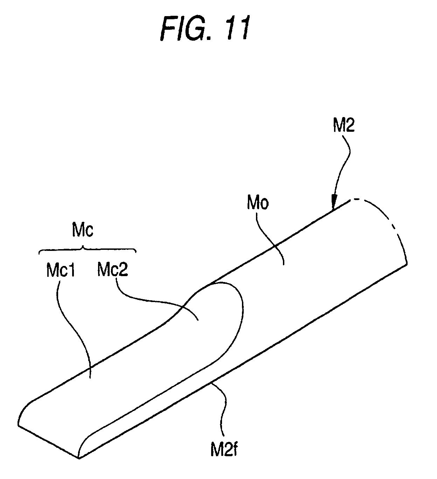

The end of each of the above moldings has a predetermined shape in order to prevent interference between the ends in door opening/closing or from the standpoint of design. Fig. 10 shows a section of the area designated by symbol A. Fig. 11 is a perspective view showing a front end M2f of the rear molding M2. As seen from these figures, the front end M2f of the rear molding M2 is formed in a "rear-cut shape" in which it extends from a shape changing area Mc composed of an end side thin area Mc1 and a thickness gradually changing area Mc2 to a common area Mo. This intends to avoid the interference between the molding M2 and a front door Df or the rear portion of the front molding M1 in opening a rear door Dr.

As the case may be, the shape changing area Mc is also required in the other portion than the end portion. The molding used in the other application field than the motor vehicle may also require a shape changing area such as the rear cut shape in which a designing side is recessed to a rear side to form a required thin shape.

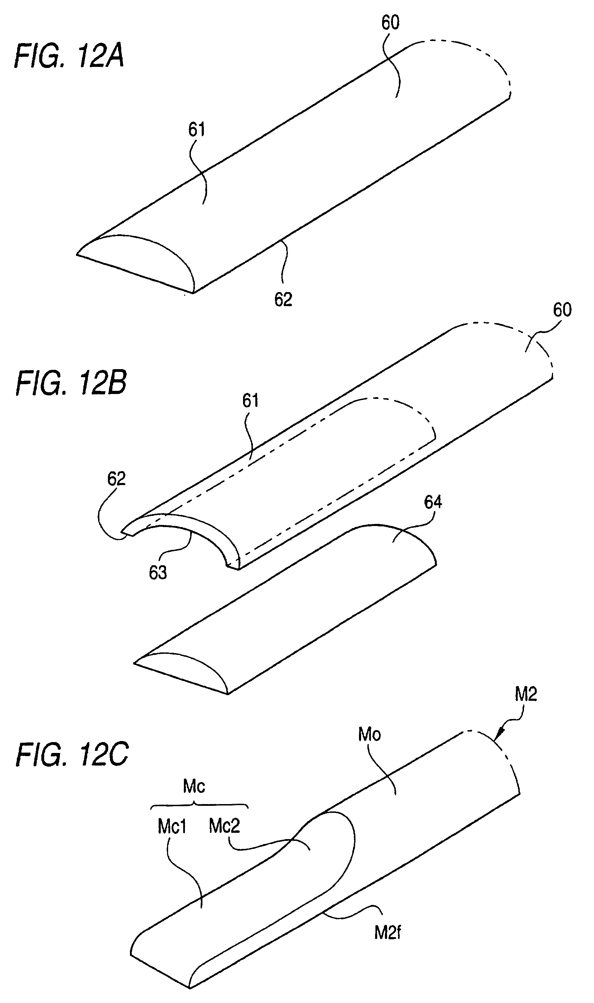

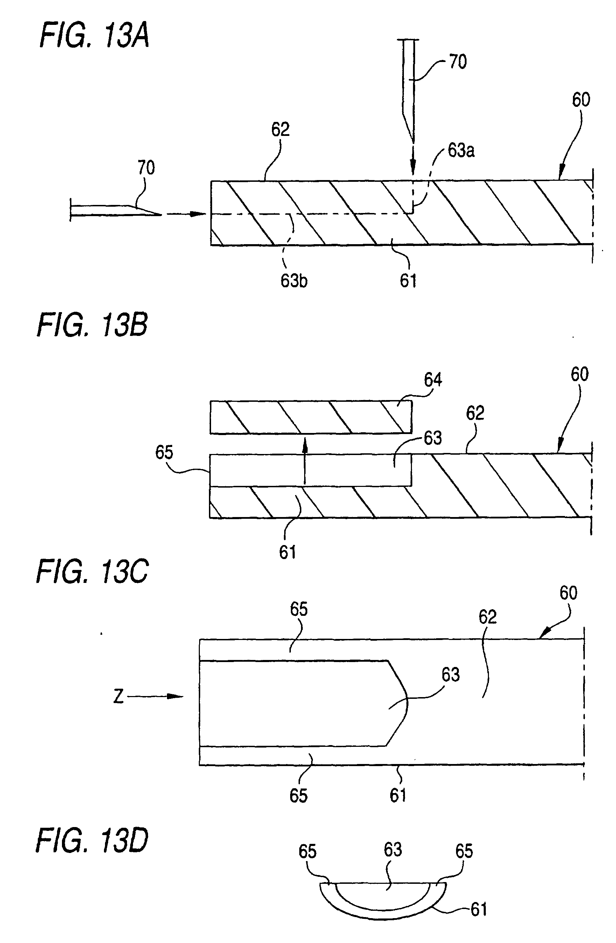

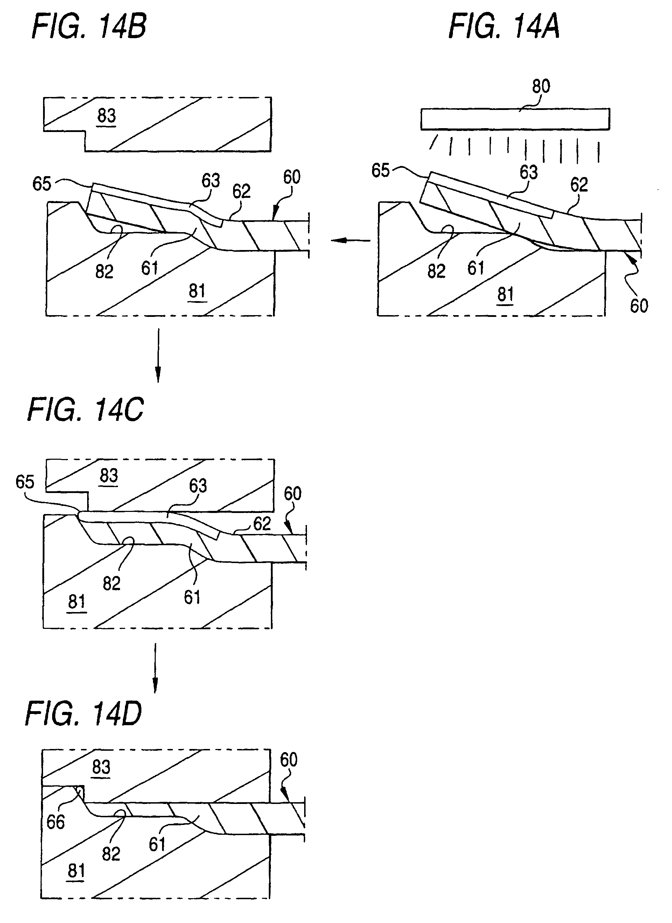

One of conventional methods of forming a molding having the shape changing area is a stamping technique as shown in Figs. 12A to 12C and 14A to 14D. First, the bottom face 62 of an end portion 61 of an extruded strip 60 having a predetermined size molded by e.g. extrusion as shown in Fig. 12A is cut by a predetermined amount using an edged tool 70 in accordance with a desired molding to provide a shape imparting space 63 there as shown in Fig. 12B and 13A to 13D. This is a bottom face cutting (removal) step. Symbol 64 is a part which was made unnecessary by cutting.

As shown in Fig. 14A, the end portion 61 is heated and softened by a heating means 80 such as a heater, and introduced into an end molding portion 82 of a fixed die 81 constituting one part of a stamping die.

As shown in Figs. 14B to 14D, a movable die 83 constituting the other part of the stamping die is stamped to push the resin on the designing side of the end portion 61 toward the shape imparting space 63 on the bottom side to provide a die shape. This is a thermal stamping step. Thereafter, by removing the extruded strip from the die, a molding M2 having a desired shape changing area at the end portion as shown in Fig. 12C is obtained.

Meanwhile, in the above stamping technique, the resin on the designing side of the extruded strip is pushed into the shape imparting space on the bottom side to impart a required shape changing area. Therefore, in order to impart the shape easily and precisely, the shape imparting space on the bottom face side must be previously formed in a shape corresponding to the shape changing area after shape imparting.

However, in a conventional technique, as shown in Fig. 13A, a cutting line 63a is made at a predetermined position on the bottom face 62 of the extruded strip 60 in a thickness direction perpendicular to the bottom face, and another cutting line 63b is made in the extruded strip 69 in parallel to the bottom face 62 so as to reach the cutting line 63a in the thickness direction. The bottom face area encircled by the cutting lines 63a and 63b in both directions is cut to form the shape imparting space 63. Thus, the shape imparting space thus formed is rectangular in a longitudinal sectional shape in a longitudinal direction of the extruded strip 60. Therefore, it was difficult to cause the shape imparting space 63 to correspond to the shape of the shape changing area Mc after shape imparting. Further, in the bottom face cutting step, the bottom face is cut using the edged tool 70 while a part of the bottom face is strongly held by a holding jig (not shown) so as to be secured in a receiving die (not shown) so that the extruded strip 60 is not shifted. Thus, as the case may be, because of hindrance of the holding jig, a part of the bottom face to be the shape imparting space inherently could not be removed. For example, where the bottom face of the extruded strip is held on its both sides orthogonal to the longitudinal direction, the edges 65 on both sides to be removed in the bottom face are left as they are. Fig. 13C is a plan view showing the bottom face 62 of the extruded strip 60 shown in Fig. 13B. Fig. 13D is a side view viewed from arrow Z in Fig. 13C.

Thus, the shape imparting space 63 on the bottom face does not correspond to the shape of the shape changing area after shape imparting, and non-cut area 65 is left because of using the holding jig. Therefore, in the thermal stamping step, a large amount of resin is extruded into the shape imparting space 63 on the bottom face side from the show face side, and is not completely received in the shape imparting space 63 to provide redundant resin. In this case, the redundant resin moves to the periphery of the shape changing area after shape imparting to provide a large amount of burrs 66 (Fig. 14D). This made complicate the work of removing the burrs after completing the molding. Further, since the redundant resin must move the periphery of the shape changing area through the shape imparting space 63, the moving distance of the resin becomes long so that unequal stress is likely to occur within the shape changing area while the resin moves. The stress remains within the shape changing area after shape imparting so that distortion is generated within the shape changing area by releasing the stamping stress. Thus, the appearance of the molding was impaired.

DE 909 305 C discloses a method of manufacturing a bottle formed of synthetic resin. A melting step is used to bond a disc to an elongated bottle element. To accommodate surplus of molten resin which is not used for connecting the bottle elements, resin accommodating grooves are provided.

US 3,684,582 discloses a battery box comprising a thin-walled synthetic resin battery box and a pair of flanges which are secured to the end walls of the battery box. The flanges are fixed to the battery box by melting a protruding portion of the flanges by heating these with the heater. The molten resin flows into concave portions and the flanges are stack to the battery box.

DE 14 79 691 A discloses a method of welding two thermo-plastic materials. The ends of strips are provided with protrusions and recesses. The protrusions are heated and the respective faces are pressed against each other. Thereby, the molten resin flows into the respective grooves.

### SUMMARY OF THE INVENTION

The present invention has been accomplished in view of the. above problems, and intends to provide a method of forming a molding by stamping which can reduce the work of removing burrs after stamping, and without being influenced by a difference between the shape of a shape imparting space before shape imparting and that of a shape changing area after shape imparting, prevent unequal stress due to the movement of redundant resin from occurring in stamping, thereby providing a molding with a good appearance.

To achieve the above object, according to the invention, there is provided a method for forming a molding according to claim 1. One end of said redundant resin accommodating area is contiguous to said shape imparting space.

Preferred embodiments are defined by the dependent claims.

Preferably, said redundant resin accommodating concave area is formed on both sides of the shape imparting space.

The above and other objects and features of the present invention will be more apparent from the following description taken in conjunction with the accompanying drawings.

### DETAILED DESCRIPTION OF THE DRAWINGS

Fig. 1 is a partial perspective view showing the step of removing the bottom face in a method of forming a molding according to an embodiment of the present invention;
Fig. 2 is a perspective view showing an extruded strip after completion of the bottom face removing step in the embodiment;
Fig. 3 is a sectional view along line 3 - 3;
Fig. 4 is a sectional view showing a heating/softening step in the embodiment;
Fig. 5 is a sectional view showing an initial stage of a stamping step in the embodiment;
Fig. 6 is a sectional view showing how redundant resin is accommodated in a redundant resin accommodating concave area;
Fig. 7 is a sectional view showing the manner when the stamping step has been completed in the embodiment;
Fig. 8 is a sectional view showing a step of removing burr in the embodiment;
Fig. 9 is a side view of a motor vehicle equipped with a molding;
Fig. 10 is an enlarged sectional view of an area A in Fig. 9;
Fig. 11 is a perspective view showing the end portion of a molding;
Figs. 12A to 12C are perspective views showing the method of forming a molding according a prior art;
Figs. 13A to 13D are sectional views showing sequential steps of removing the bottom face of an extruded strip according to the prior art; and
Figs. 14A to 14D are sectional views showing sequential steps of stamping according to the prior art.

### BRIEF DESCRIPTION OF THE DRAWINGS

Now referring to the drawings as attached herewith, a detailed explanation will be given of the present invention.

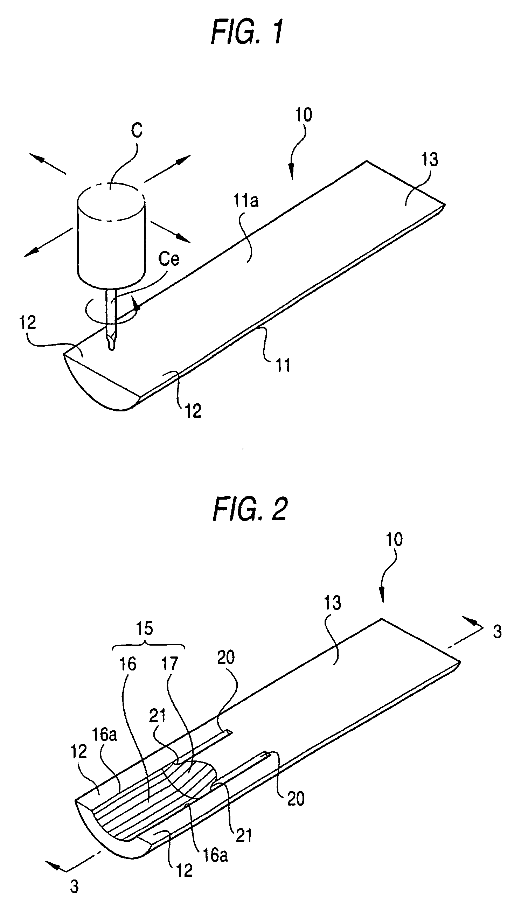

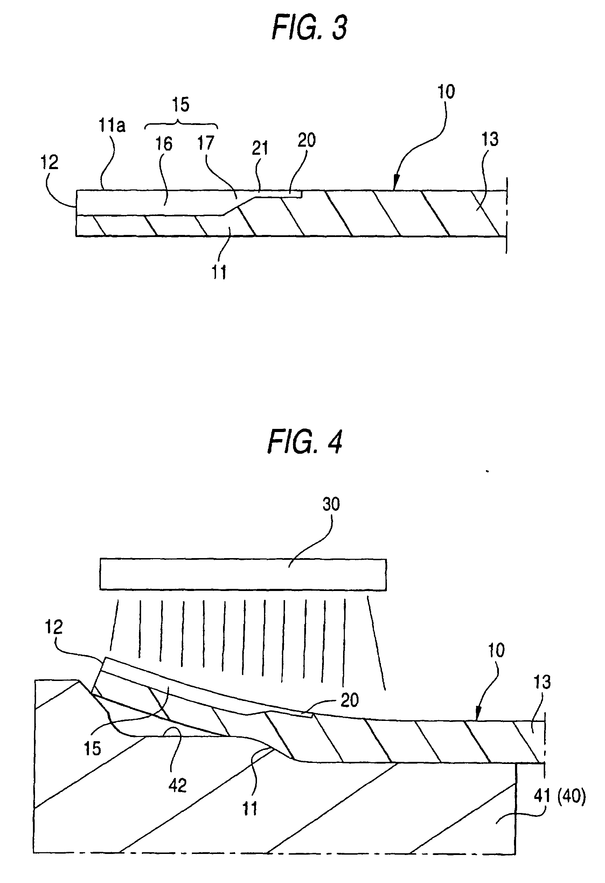

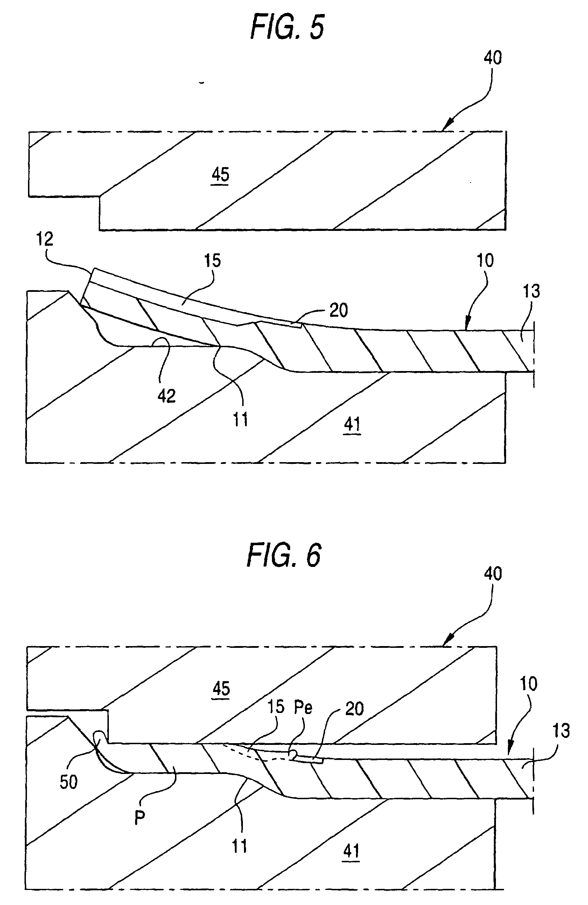

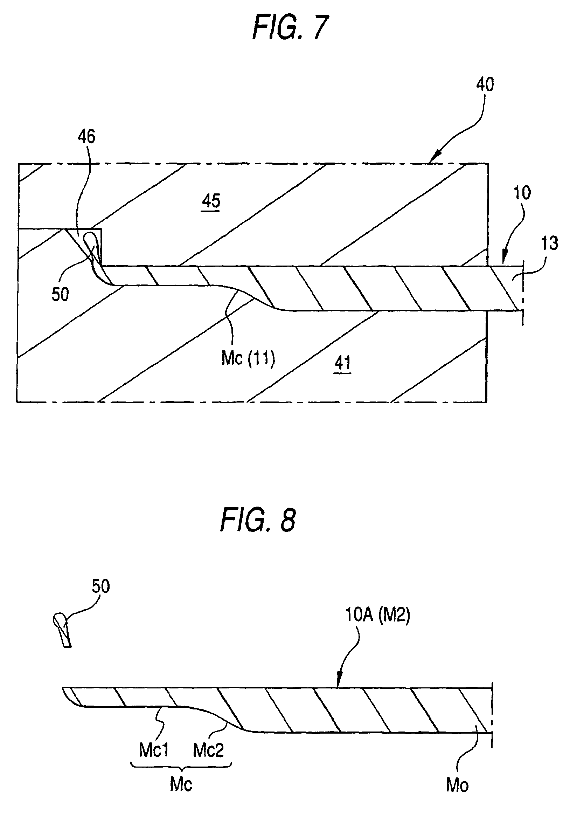

Fig. 1 is a partial perspective view showing the step of removing the bottom face in a method of forming a molding by stamping according to an embodiment of the present invention. Fig. 2 is a perspective view showing an extruded strip after completion of the bottom face removing step in the embodiment. Fig. 3 is a sectional view along line 3. - 3. Fig. 4 is a sectional view showing a heating/softening step in the embodiment. Fig. 5 is a sectional view showing an initial stage of a stamping step in the embodiment. Fig. 6 is a sectional view showing how redundant resin is accommodated in a redundant resin accommodating concave area. Fig. 7 is a sectional view showing the manner when the stamping step has been completed in the embodiment. Fig. 8 is a sectional view showing a step of removing burrs in the embodiment.

An explanation will be given of the method of forming a molding by stamping according to the present invention with reference to the method of forming a molding M2 for a motor vehicle having a shape changing area Mc in the end portion M2f as shown in Figs. 10 and 11, which has been described in connection with the prior art.

As shown in Fig. 1, a required area of an extruded strip 10 molded successively by e.g. a known extrusion technique, a bottom face 11a of an end portion in this embodiment is cut away by a predetermined amount using a suitable means such as a cutting tool or edged tool to form a shape imparting space 15 as shown in Fig. 2 and Fig. 3 showing its section taken along line 3 - 3. The above extruded strip 10 is made of known extrudable resin such as vinyl chloride resin (PVC) and acrylonitrile styrene acrylate copolymer (AAS) and is formed of a single or multiple layers. The cross sectional shape of the extruded strip 10 is a curved shape with a swelling designing side which conforms to the shape of a common area Mo of a molding M2 to be molded.

The shape imparting space 15 is made not to obstruct shape imparting when the above end portion 11 is thermally stamped by the subsequent step. In this embodiment, the shape imparting space 15 is formed by cutting the bottom face 11a using a rotary cutting tool 70 provided with an end mill Ce such as a ball end mill, flat end mill, etc at its tip while both ends 12, 12 are held by a holding jig (not shown) so as to be secured in a receiving die (not shown) so that the extruded strip 10 is not slipped. Incidentally, as explained in connection with the prior art, the shape imparting space may be formed in such a manner that a cutting line is made in a thickness direction perpendicular to the bottom face of the end portion by the edged tool, and another cutting line is made in parallel to the bottom face so as to reach the cutting line in the thickness direction and the bottom face area encircled by the cutting lines in both directions is cut (Figs. 13A to 13D). The shape of the shape imparting space 15 in this embodiment is composed of a first space 16 which is deep and a second space 17 which is gradually shallow which are contiguous to each other. These spaces 16 and 17 correspond to the thin area Mc1 and thickness gradually changing area Mc2 of the shape changing portion Mc of the molding M2 to be molded. In this case, the shape of the shape imparting space 15 may not strictly correspond to the shape changing portion Mc because of the design of a redundant resin accommodating concave area 20 described later. Namely, the shape of the shape imparting space 15 may be slightly different from that of the shape changing portion after shape imparting.

When the shape imparting space 15 is formed or thereafter, as shown in Fig. 2 and Fig. 3 showing the section taken along line 3 - 3 therein, a redundant resin accommodating concave area 20 contiguous to the shape imparting space 15 is formed. This redundant resin accommodating concave portion 20 is formed to accommodate (relieve) the redundant resin which cannot be received in the shape imparting space 15 at the time of thermal stamping described later. In this embodiment, it is formed using the above rotary cutting tool C when the shape imparting space 15 is formed. The redundant resin accommodating concave area 20 is formed so that its one end 21 is contiguously oriented toward the common portion 13 from the shape imparting space 15 in order to shorten the moving distance of redundant resin at the time of thermal stamping, precisely, that of the redundant resin produced on the side of the common area 13 of the end portion 11 to be molded. The redundant resin accommodating concave area 20 is formed at the position where a large amount of redundant resin will be produced at the time of thermal stamping, i.e. a non-cut area not removed by the use of the holding jig B when the shape imparting space 15 is formed (i.e. in the vicinity of the above both ends 12, 12). In this embodiment, redundant resin accommodating concave areas 20, 20 each having a predetermined length, depth and width are made continuously from both ends 16a, 16a of the first space 16 toward the common area 13, respectively. The length, depth and width of the redundant resin accommodating concave area 20 is set suitably taking into consideration the shape of the shape imparting space 15 and shape changing portion Mc after shape imparting. For example, they are set to be long, deep and large when the shape of the shape imparting space 15 is largely different from (not correspond to) that of the shape changing portion Mc after shape imparting, or when the non-cut areas 12, 12 are large.

Thereafter, as shown in Fig. 4, the bottom face removed portion (including the show face side as well as the bottom face side) with the shape imparting space 15 of the extruded strip 10 and the redundant resin accommodating concave area 20 is heated and softened by a suitable heating means 30 such as a heater, and introduced into a fixed die 41 of a stamping die 40 with the bottom face removal portion 11 located above. In this case, the heating temperature varies according to the material of the extruded strip 10, heating time, etc. Where the extruded strip 10 is made of PVC, the temperature of the heating means, although it depends on a heating source, is generally set at about 300°C in hot air blow. The die face 42 of the fixed die 41 has a shape conforming to that of the show face of the shape changing portion Mc of the molding M2 to be machined. Incidentally, the above heating may be carried out outside the stamping die 40, or on the fixed die 41 of the stamping die 40.

As shown in Figs. 5 to 7, the bottom face portion 11 of the extruded strip 10 thus heated and softened is shaped into the shape of the die face 42 of the fixed die 42 in such a manner that a movable die 45 is stamped to the fixed die 41 of the stamping die so that the resin P on the show face side corresponding to the shape imparting space 15 of the bottom face removal portion 11 is pushed toward the shape imparting space on the bottom face side. Incidentally, the stamping die 40 in this embodiment has the space 46 (Fig. 7) to accommodate the burrs 50 produced in stamping process, in which the burrs 50 are on the end side of bottom face portion 11 of the extruded strip 10 and are forced out of a parting line of the above fixed mold and moval mold.

In this stamping, as understood from Fig. 6, since the shape imparting space 15 does not correspond to that of the shape changing portion Mc and the non-cut area 12 is left because of using the holding jig when the shape imparting space 15 is formed, the amount of resin P pushed into the shape imparting space 15 is larger than the volume of the shape imparting 15 so that the redundant resin Pe overflowing from the shape imparting space 15 is accommodated in the redundant resin accommodating concave area 20 made contiguously with the shape imparting space 15. Thus, the amount of burrs 50 appearing on the periphery of the shape changing portion Mc after shape imparting can be reduced. Therefore, the work of removing the burrs after stamping can be greatly reduced. Further, since the moving distance of the redundant resin Pe (particularly, the distance when the redundant resin Pe produced on the side of the common portion 13 of the bottom face removal portion 1 moves to the burrs accommodating space 46 formed in the stamping mold at the tip of the bottom face portion 1 is shortened, it is possible to prevent movement of the redundant resin from producing unequal stress in the shape changing area Mc. As a result, it is possible to prevent the stress from remaining within the shape changing area after shape imparting so that distortion is generated within the shape changing area after the stamping stress is released, thereby not impairing the appearance of the molding.

After the extruded strip 10 is cooled and shape-fixed, the movable die 45 is elevated to open the stamping mold 40 so that the stamping stress is released, thereby taking out a molded product 10A as shown in Fig. 8. Finally, a small amount of burrs overflowed into the burrs accommodating space of the stamping die 40 at the time of stamping is removed, thereby providing a desired molding.

Additionally, the above embodiment was directed to the method of forming a molding for a motor vehicle having a shape changing area at its end area, but the molding method according to the present invention can be applied to the method of forming a molding having a shape changing area at the other portion than the end portion, and can also be applied to the method of forming a molding not used for the motor vehicle.

As illustrated and described above, in accordance with the molding method of this invention, the amount of burrs occurring on the periphery of the shape changing portion after shape imparting can be reduced so that the work of removing burrs after stamping. In addition, since moving distance of the redundant resin can be decreased at the time of shape imparting, it is possible to prevent unequal stress due to the movement of redundant resin from occurring in stamping, thereby providing a molding with a good appearance.

## Claims

1. A method for forming a molding by stamping, comprising the steps of:
providing an extruded strip (10) having a bottom face and a show face;
removing a predetermined amount of an end portion of the bottom face (11a) of the extruded strip (10) thereby forming a shape imparting space (15) and a redundant resin accommodating concave area (20) contiguous to the shape imparting space (15);
heating and softening said end portion of the bottom face (11); and
stamping said softened bottom face (11) by a stamping die (40) having a predetermined shape to shape said end portion of the bottom face (11) into a shape of the stamping die (40) by pressing resin into the shape imparting space (15) and accommodating redundant resin in said redundant resin accommodating concave area (20).

2. A method of forming a molding according to claim 1, wherein said redundant resin accommodating concave area (20) is formed on both side ends of the shape imparting space (15) and one end of said redundant resin accommodating area (20) is contiguous to said shape imparting space (15).

3. A method of forming a molding according to claim 1, wherein burrs produced on the surface of the excluded product in said stamping step are accommodated in a burr accommodating space (46) of the stamping die (40).

4. A method of forming a molding according to claim 1, further comprising a step of, after said stamping step, removing burrs (50) accommodated in the burr accommodating space (46) of the stamping die to form a desired molding.

## Patentansprüche

1. Verfahren zur Herstellung eines Formkörpers durch Stanzen mit folgenden Schritten:
Bereitstellung eines extrudierten Streifens (10), der eine untere Oberfläche und eine Sichtoberfläche aufweist;
Entfernen eines vorbestimmten Ausmaßes eines Endabschnitts der unteren Oberfläche (11a) des extrudierten Streifens (10), wodurch ein Formaufnahmeraum (15) und ein konkaver Bereich (20) zur Aufnahme überschüssigen Harzes ausgebildet werden, der stetig in den Formaufnahmeraum (15) übergeht;
Erwärmen und Erweichen des Endabschnitts der unteren Oberfläche (11); und
Stanzen der erweichten, unteren Oberfläche (11) durch ein Stanzwerkzeug (40), das eine vorbestimmte Form aufweist, um den Endabschnitt der unteren Oberfläche (11) in die Form des Stanzwerkzeuges (40) umzuformen, durch Drücken von Harz in den Formaufnahmeraum (15), und Aufnahme überschüssigen Harzes in den konkaven Bereich (20) zur Aufnahme überschüssigen Harzes.

2. Verfahren zur Herstellung eines Formkörpers nach Anspruch 1, bei welchem der konkave Bereich (20) zur Aufnahme überschüssigen Harzes an beiden Seitenenden des Formaufnahmeraums (15) vorgesehen ist, und ein Ende des Bereiches (20) zur Aufnahme überschüssigen Harzes stetig in den Formaufnahmeraum (15) übergeht.

3. Verfahren zur Herstellung eines Formkörpers nach Anspruch 1, bei welchem Grate, die auf der Oberfläche des extrudierten Erzeugnisses in dem Stanzschritt erzeugt werden, in einem Grataufnahmeraum (46) des Stanzwerkzeuges (40) aufgenommen werden.

4. Verfahren zur Herstellung eines Formkörpers nach Anspruch 1, welches den weiteren Schritt umfasst, nach dem Stanzschritt Grate (50) zu entfernen, die in dem Grataufnahmeraum (46) des Stanzwerkzeuges aufgenommen sind, um einen gewünschten Formkörper auszubilden.

## Revendications

1. Procédé de formation d'une moulure par estampage, comprenant les étapes consistant à :
prendre une bande extrudée (10) ayant une face inférieure et une face d'exposition,
enlever une quantité déterminée d'une partie d'extrémité de la face inférieure (11a) de la bande extrudée (10) afin de former un espace donnant forme (15) et une zone concave de réception de résine en excès (20) contiguë à l'espace donnant forme (15),
chauffer et ramollir ladite partie d'extrémité de la face inférieure (11), et
estamper la face inférieure (11) ramollie au moyen d'une matrice d'estampage (40) ayant une forme déterminée pour donner cette forme à la partie d'extrémité de la face inférieure (11) par enfoncement de résine dans l'espace donnant forme (15) et réception de résine en excès dans la zone concave de réception de résine en excès (20).

2. Procédé de formation d'une moulure selon la revendication 1, dans lequel la zone concave de réception de résine en excès (20) est formée sur les deux extrémités latérales de l'espace donnant forme (15), et une extrémité de la zone de réception de résine en excès (20) est contiguë à l'espace donnant forme (15).

3. Procédé de formation d'une moulure selon la revendication 1, dans lequel les bavures produites à la surface du produit extrudé dans l'étape d'estampage sont reçues dans un espace de réception de bavures (46) de la matrice d'estampage (40).

4. Procédé de formation d'une moulure selon la revendication 1, comprenant en outre, après l'étape d'estampage, une étape consistant à enlever les bavures (50) reçues dans l'espace de réception de bavures (46) de la matrice d'estampage pour former une moulure désirée.
